# EUROPEAN PATENT APPLICATION

(11) **EP 4 762 923 A1**
(43) Date of publication of application: **24.06.2026**
(21) Application number: 25218094.8
(22) Date of filing: 24.11.2025
(51) Int. Cl.: A01M 25/00

(54) **MULTIPLE MODALITY DISGUISED PEST ABATEMENT SYSTEM**

(30) Priority: 18.12.2024 US 202418985349
(71) Applicant: J.T. Eaton & Company, Inc., Twinsburg Ohio 44087 (US)
(72) Inventor: BAKER, Dale, Cleveland, 44119 (US)
(74) Representative: Barker Brettell LLP

(57) **Abstract**

A pest abatement system (40) constructed to abate pests such as insects and/or rodents and that is constructed to appear as a non-abatement device customary to a deployment environment. The abatement system (40) is defined by an enclosure and a selectively movable drawer (48) that slideably cooperates with the enclosure. A lock arrangement includes a key that operates in multiple modalities restricts access to the contents of the drawer to authorized personnel. The enclosure is constructed to accommodate connection of camouflage structures (42) to the abatement system (40) and which are operable to camouflage the nature of the pest abatement system (40) as a non-abatement device. The drawer (48) is further constructed to accommodate onboard storage of multiple pest abatement devices (86, 88, 90, 92, 94, 96, 98, 100, 102) and/or consumables that are inaccessible to pests that have entered a containment or trap area of the abatement system (40).

## Description

### BACKGROUND OF THE INVENTION

### 1. Field of the Invention

The present invention relates generally to an insect and rodent control system and, more particularly, relates to an insect and rodent trap system that is conveniently serviceable, can be uniquely configured to accommodate various alternate or multiple pest abatement modalities, and that is not readily discernable to the public or those not involved in the pest abatement activities as a pest abatement system or device.

### 2. Background

Pest abatement devices are generally provided in various forms and are constructed to operate in various modalities. Some such modalities include glue traps, bait stations, and mechanical traps, to name a few. Glue traps are commonly constructed such that insects and rodents that pass across an exposed adhesive surface of the trap are rendered immobilized or otherwise incapable of escaping from the glue trap. The trap and associated pests are subsequently disposed. Pest baits commonly employ an optional attractant that includes an insecticide or rodenticide. Contact with and/or ingestion of the bait material leads to pest mitigation via toxicity due to contact with and/or ingestion or consumption of the bait media. Mechanical traps can operate in various modalities such as non-harming trap configurations and/or spring trap constructions. Non-harming traps are generally constructed such that pests can enter such traps but are incapable of escaping therefrom. Once trapped, users can relocate and release trapped pests at more suitable locations. Spring loaded mechanical traps are commonly constructed to include an actuator pedal or trigger that, when impinged by a pest, actuates a spring loaded mechanical arm or jaw that is constructed to capture a pest proximate the trigger.

Regardless of the abatement and/or trapping methodology employed, it is commonly preferable to limit access and/or exposure of the discrete abatement devices, baits, and/or traps to the surrounding atmosphere. Such a consideration prevents inadvertent tripping of mechanical trapping devices, displacement of baits and/or glue traps, and inadvertent contact by children, pets, non-pests, and service personnel with any baits that may be employed and any traps that remain loaded. Such a consideration also hides from view any trapped or irradicated pests. However, such pest abatement methodologies and systems are not without their respective drawbacks.

For instance, when a rodent problem is detected, users commonly acquire and deploy a desired mechanical or bait rodent abatement system. Although such devices may effectuate abatement of rodents, such devices are commonly inoperable to effectuate insect abatement. Similarly, insect bait and trap systems are commonly ineffectual to mitigate rodent abatement. Accordingly, users undertaking abatement efforts of multiple species of pests are commonly required to acquire, deploy, and maintain various discrete pest specific abatement systems and/or devices. There is therefore a need for a pest abatement system that can be configured to mitigate multiple species of pests. There is a further need for a pest abatement system that can be configured to be operable in various modalities such as non-harming and/or spring trapping of rodents in accordance with a user's preferences.

Whether employed in residential, rental, or commercial environments, existing pest abatement systems suffer from various additional drawbacks attenuate to user and/or third-party interactions therewith. For instance, many such devices are readily identifiable as either insect or rodent abatement systems. In commercial environments, such as retail and/or food service environments, indications of insect or rodent abatement efforts may be deleterious to the underlying commercial efforts of the establishment. That is, consumer's mere sighting of the presence of insect and/or rodent abatement efforts, whether a pest issue has been detected or not and whether a tenant has the authority to interfere with and/or manage placement and service of the abatement device, may be off-putting and deter a consumer's patronage of the respective establishment. Accordingly, there is a further need for a multiple modality pest abatement system having a non-apparent appearance when deployed.

Still further, when deployed, known devices require periodic monitoring and/or service to maintain operability of the abatement system until the pest issue has been mitigated. Depending on the operational modality employed and/or the nature of the pest/pests intended to be mitigated, the frequency and nature of the service or maintenance events can vary. Regardless of the nature of the abatement modality and/or the nature of the pest to the abated, interaction with the abatement device by service personnel - such as to remove trapped pests, replenish baits, and/or replace and/or rest traps can draw undesired attention to the abatement system. Such interactions can be particularly deleterious in commercial enterprises if the abatement system requires service during the hours of operation associated with the underlying enterprise. Such shortcomings can be exacerbated if the abatement systems deployed is readily identifiable as an abatement system in as much as the presence of the service personnel and interaction with the abatement systems draws further attention thereto. Accordingly, there is a further need for an abatement system that, when deployed, can be serviced in an inconspicuous or not readily ascertainable manner.

In addition to the inspection concerns discussed above, many known pest abatement systems or apparatuses can suffer from additional drawbacks directed to access to the contents thereof. When deployed in restricted access environments, it may be acceptable to present the one or more modalities of the abatement system in a generally open manner with the understanding that the discrete devices will only be accessible to those responsible for servicing such devices or those with a sufficient understanding to not interfere with the respective devices. When provided in a configuration wherein the operable bait and trap devices are enclosed in a housing, such housings generally have a relatively simple construction that is constructed to limit exposure or access to the discrete abatement modalities by pets, small children, and the like. Such devices are however susceptible to nefarious interaction by third parties not involved in the discrete abatement efforts and/or theft. Such non-authorized interactions can be detrimental to the reputation of those involved in pest abatement services and, if stolen, the discrete abatement devices remain usable by the nefarious third parties but must be replaced by the original purchaser. Although generally economical, such losses increase the operating costs of abatement service operators. Accordingly, there is a further need to improve the security associated with interaction with abatement systems during deployment.

### BRIEF DESCRIPTION OF THE INVENTION

By way of nonlimiting summary, in accordance with one aspect, the present invention addresses one or more of the above-referenced needs by providing a pest abatement system that is less apparent as an abatement device and whose presence in a respective environment is more customary to the particular environment. In a preferred aspect, the abatement device can be uniquely configured to alter the appearance of the abatement device to appear as a device more customary to the environment in which it is deployed. Another aspect of the present invention discloses a pest abatement device that is securable such that interaction with the abatement device can be limited to authorized individuals. Yet another aspect of the present invention discloses a pest abatement device having on-board storage of various abatement methodologies and/or consumables associated with deployment of the abatement device such that the abatement device can be deployed to abate selected or targeted pests and/or serviced without removal from the field if desired.

In one aspect of the present invention discloses a pest abatement system that is constructed to abate pests, such as insects and/or rodents, and that is constructed to appear as a non-abatement device customary to a deployment environment. The abatement system is defined by an enclosure and a selectively movable drawer that slideably cooperates with the enclosure. A lock arrangement includes a key that operates in multiple modalities and restricts access to the contents of the drawer to authorized personnel. The enclosure is constructed to accommodate connection of camouflage structures to the abatement system and which are operable to camouflage the nature of the pest abatement system as a non-abatement device. The drawer is further constructed to accommodate onboard storage of multiple pest abatement devices and/or consumables that are selectively accessible and/or inaccessible to pests that have entered the abatement system.

Another aspect of the present invention discloses a pest abatement system that has an enclosure with at least one pest entry opening and a drawer that slideably cooperates with the enclosure. The drawer is selectively operable to extend beyond the enclosure when open. A lock system selectively restrains the drawer in a closed position relative to the enclosure when the drawer is closed and is configured to limit unauthorized access to the contents of the pest abatement system when deployed.

A further aspect of the present invention that is usable or combinable with one or more of the features, aspects, or objects of the above aspects discloses a pest abatement system having an enclosure and a drawer that slideably cooperates with the enclosure. At least one pest entry opening is formed in at least one of the enclosure and the drawer and configured to allow access of pests into the pest abatement system and to at least two pest abatement devices that are supported by the drawer. The pest abatement system includes a key that is constructed to cooperate with at least one of the enclosure and the drawer and configured to allow unlocking of the drawer relative to the enclosure to allow access to each of the at least two pest abatement devices. A camouflage structure is selectively attachable to the enclosure and is configured to provide a non-abatement indication such that identification of the pest abatement system as a pest abatement system is not readily discernable.

Another aspect of the present invention that is usable or combinable with one or more of the features, aspects, or objects of the above aspects discloses a method of forming a pest abatement system that includes providing an enclosure and a drawer that slideably cooperates with the enclosure such that the drawer is movable between an open position and a closed position relative to the enclosure. A pest entry opening is formed in at least one of the enclosure and the drawer and a lock is provided that selectively secures the drawer in the closed position relative to the enclosure. A key that cooperates with the lock is provided and is operable in each of an electronic modality and a physical modality to unlock the lock to allow access to the contents of the drawer.

In a preferred aspect of the present invention, the pest abatement system includes a power source associated with powering the electronic modality associated with operation of the key and the lock. In another preferred aspect, the power source can be employed for powering discrete pest abatement devices associated with the underlying pest abatement system and/or a communication interface associated with communicating an operating status of the discrete pest abatement devices associated with the underlying pest abatement system. In another preferred aspect, the pest abatement system is configured to communicate electrical power to the discrete camouflage features that are associated with the abatement system. In another preferred aspect, users are allowed to individualize selected camouflaging structures or devices that are constructed to cooperate with the pest abatement system. In a preferred aspect, the camouflaging structures can be configured as signage, digital displays, hand sanitizer or sun screen dispenser devices, plant pots, garbage cans, charging stations, etc. When provided in power consuming camouflaging structures, it is appreciated that power can be communicated to the camouflaging structures or devices from the underlying pest abatement system and/or the power supply associated therewith.

These and other features, objects, and aspects of the present invention will be better appreciated and understood when considered in conjunction with the following detailed description and the accompanying drawings. It should be understood, however, that the following description, while indicating representative preferred embodiments of the present invention, is given by way of illustration and not of limitation. Many changes and modifications may be made within the scope of the present invention without departing from the spirit thereof, and the invention includes all such modifications.

### BRIEF DESCRIPTION OF THE DRAWINGS

A clear conception of the advantages and features constituting the present invention, and of the construction and operation of typical mechanisms provided with the present invention, will become more readily apparent by referring to the exemplary, and therefore non-limiting, embodiments illustrated in the drawings accompanying and forming a part of this specification, wherein like reference numerals designate the same elements in the several views, and in which:
**Fig. 1** is a front perspective view of a pest abatement device or system according to the present invention and shown as a first camouflage configuration as commercial signage;
**Fig. 2** is a front perspective view of a portion of a base of the pest abatement system shown in Fig. 1 with a key positioned proximate thereto;
**Fig. 3** in a view similar to Fig. 2 wherein the key is oriented to physically interact with the base of the pest abatement system;
**Fig. 4** is a perspective view of the base portion of the pest abatement system shown in Fig. 1 with an operable drawer associated therewith oriented in an open position;
**Fig. 5** is perspective view of the pest abatement system shown in Fig. 1 with the drawer oriented in an open orientation and plurality of pest abatement devices that can be selectively associated with the drawer;
**Fig. 6** is a view similar to Fig. 5 with a plurality of pest abatement devices associated with the drawer;
**Fig. 7** is a view similar to Fig. 6 with another plurality of pest abatement devices associated with the drawer;
**Fig. 8** is a view similar to Fig. 6 with an alternate plurality of pest abatement devices associated with the drawer;
**Fig. 9** is a view similar to Fig. 6 with another alternate plurality of pest abatement devices associated with the drawer;
**Fig. 10** is a view similar to Fig. 6 with another alternate plurality of pest abatement devices associated with the drawer;
**Fig. 11** is a view similar to Fig. 6 with a further alternate plurality of pest abatement devices associated with the drawer;
**Fig. 12** is a perspective view of one of the pest abatement devices shown in Fig. 11;
**Fig. 13** is a view similar to Fig. 6 with a plurality of alternate pest abatement devices associated with the drawer;
**Fig. 14** is a view similar to Fig. 6 with a plurality of pest abatement devices associated with the drawer;
**Fig. 15** is a perspective view of one of the pest abatement devices shown in Fig. 14;
**Fig. 16** is a view similar to Fig. 6 with a plurality of pest abatement devices associated with the drawer;
**Fig. 17** is view similar to Fig. 6 with a plurality of pest abatement devices associated with the drawer;
**Fig. 18** is a top perspective view of the base of the pest abatement system shown in Fig. 1 with the camouflage element disengaged therefrom;
**Fig. 19** is a perspective view of a lower portion of the camouflage element shown in Fig. 1;
**Fig. 20** is a perspective view of alternate camouflage elements of the pest abatement system shown in Fig. 1;
**Fig. 21** is a perspective view of a base portion of the pest abatement system in

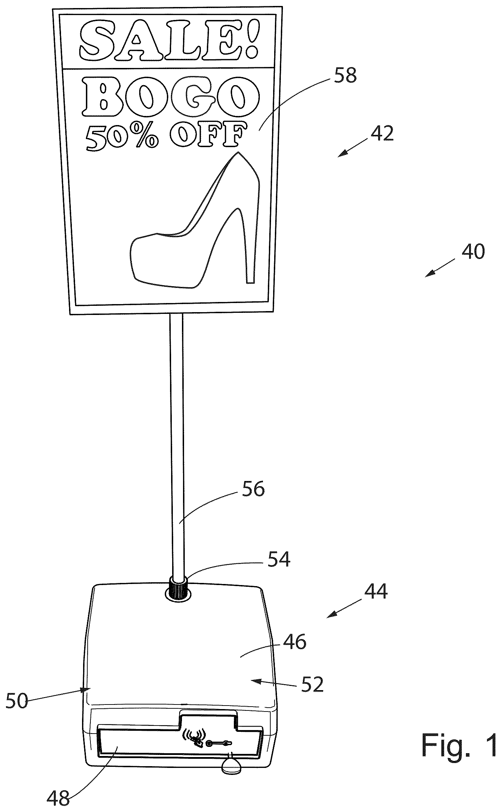

Fig. 1 with a power source associated therewith; and

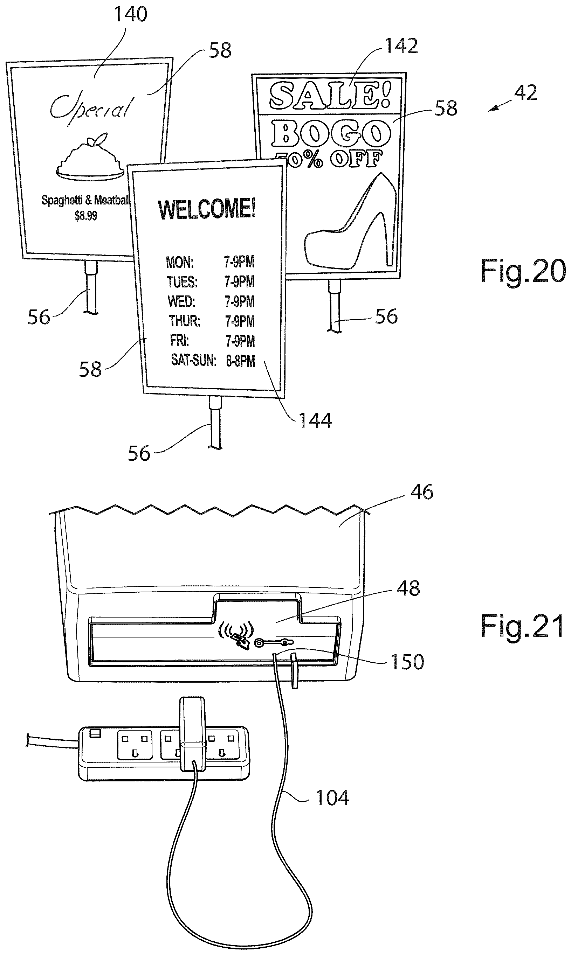

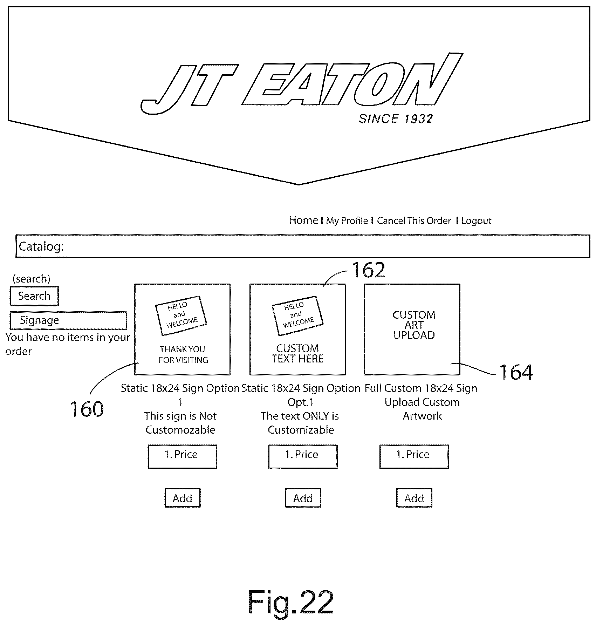

**Fig. 22** shows a graphical user interface configured to allow user selected configuration of one or more of the camouflage elements shown in Fig. 20.

In describing the embodiment of the invention which is illustrated in the drawings, specific terminology will be resorted to for the sake of clarity. However, it is not intended that the invention be limited to the specific terms so selected and it is to be understood that each specific term includes all technical equivalents which operate in a similar manner to accomplish a similar purpose.

### DETAILED DESCRIPTION

Fig. 1 shows a pest control or pest abatement device or system 40 according to the present invention. As shown in Fig. 1 and as further disclosed below, pest abatement system 40 includes a non-pest abatement indicia or camouflage structure, camouflage indicia, camouflage element, or camouflage device 42 that, when deployed, allows pest abatement system 40 to appear as a device that is unrelated to pest control or abatement operations. Pest abatement system 40 includes an enclosure or base assembly 44 that is generally defined by a housing 46 and a drawer 48 that slideably cooperates therewith. As disclosed further below, drawer 48 slideably cooperates with housing 46 and is constructed to allow selective access to the contents thereof. In a preferred embodiment, drawer 48 is selectively securable to housing 46 to provide only authorized access to the contents thereof.

Housing 46 preferably defines one or more openings 50, 52 that are sized to allow entry, and only selectively potential exit, of pests into the confines of housing 46 and exposure to any pest abatement devices contained therein. As disclosed further below, openings 50, 52 defined by housing 46 are oriented and positioned to allow passage of pests into housing 46 and the drawer 48 associated therewith when drawer 48 is oriented in the closed position relative housing 46. A stem 54 faces in a generally upward direction and is constructed to cooperate with a post 56 configured to secure camouflage device 42, such as environment specific signage 58 as shown in Fig. 1 for example, relative to base assembly 44.

As disclosed further below, camouflage device 42 can be provided in various configurations such as signage 58 indicative of or customary to the deployment environment, as shown in Fig. 1, and/or other camouflage elements or devices germane to a particular environment associated with deployment of pest abatement system 40. As disclosed further below, it is appreciated that camouflage device 42 can be provided and/or take various forms. Camouflage device 42 can be provided as static or printed signage; changeable printed signage; digital or electronic displays or televisions; electronic device charging stations; sanitizer, moisturizer, candy, and/or sunscreen dispensing stations; trash bins; plant pots, planter boxes, or the like; to name but a few.

Regardless of the specific or desired appearance and/or function associated with camouflage device 42, base assembly 44 provides a ballast or weighted configuration, such as 10 pounds or the like, when engaged with a respective camouflage device 42 to mitigate tippage of pest abatement system 40 due to inadvertent contact with camouflage device 42 and/or wind loads impinged thereupon when deployed in outdoor environments. In a preferred embodiment, the size and distance of camouflage devices 42 from, and the ballast associated with, base assembly 44 are configured such that pest abatement system 40 can withstand force 3 or approximate 10 knot winds without tippage thereof. Understandably, when provided with certain camouflage elements, such as trash bins or planter stands or pots, post 56 may cooperate with the respective camouflage elements and/or be selectively omitted for those deployments wherein the camouflage element is not customarily elevated and/or has an elongate construction that generally overlies base assembly 44 and does so in a manner that does not interfere with the pest abatement operation of base assembly 44 and is engaged therewith to mitigate undesired separation therebetween. As disclosed further below, regardless of the nature or modality of camouflage device 42 engaged with base assembly 44, drawer 48 is preferably constructed to be selectively secured to housing 46 and selectively movable and/or removable therefrom to facilitate authorized user interaction with the contents of base assembly 44 and to do so without user interaction with or separation of camouflage device 42 from base assembly 44.

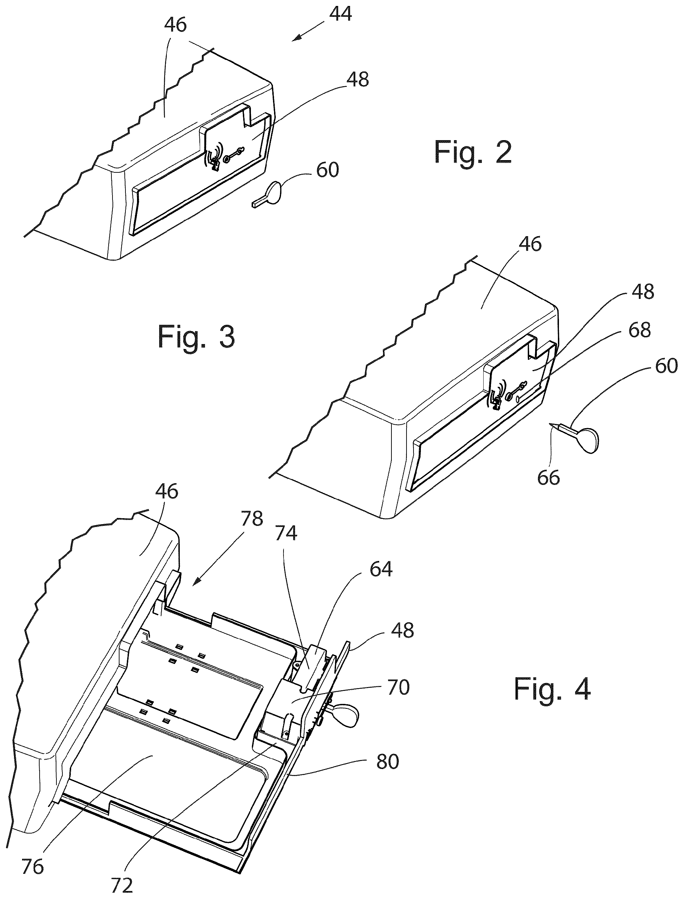

Referring to Figs. 2-4, pest abatement system 40 preferably includes a key 60 that is constructed to cooperate with base assembly 44 to limit operation of drawer 48. In a preferred aspect, key 60 cooperates with base assembly 44 in multiple modalities. In a first modality, key 60 is constructed to cooperate with a latch mechanism 64 (Fig. 4) in a remote wireless electronic interface such as via blue tooth or radio frequency identification (RFID) communication and allows touchless operation of latch mechanism 64 and thereby touchless opening of drawer 48 relative to housing 46. When positioned proximate base assembly 44, key 60 effectuates the touchless operation of latch mechanism 64 to effectuate the discharge or opening of drawer 48 relative to housing 46. In a preferred aspect, key 60 also includes a shank portion 66 that is constructed to cooperate with a keyway 68 defined by drawer 48 and/or housing 46 to allow selective operation of latch mechanism 64 and thereby the opening of drawer 48 relative to housing 46 when desired and in the event the wireless cooperation of key 60 with latch mechanism 64 becomes inoperable.

As shown in Fig. 4, drawer 48 includes a control mechanism 70 that cooperates with latch mechanism 64 to accommodate the selective opening of drawer 48 relative to housing 46 only when a suitably authorized key 60 is oriented proximate to the base assembly 44 or engaged with keyway 68 thereby effectuating operation of latch mechanism 64. Such a consideration mitigates interaction with pest abatement system 40 by unauthorized users, mitigates motivations to nefariously interact with or theft of abatement system 40, and provides redundant authorization associated with the security of pest abatement system 40. Control mechanism 70 can be further constructed to accommodate wireless communication with key 60 as well as other portable electronic devices such as phones, personal data devices, computers or the like. When provided with such operability and/or connectivity, it is appreciated that pest abatement system 40 can be configured to communicate information indicative of the operating state of the pest abatement system 40 to service or other responsible personnel. It is appreciated that pest abatement system 40 can be configured to effectuate a wireless "call for service" functionality associated with alerting service personnel with respect to the need to service the pest abatement devices associated therewith during or immediately after a trap or capture event and/or in a timed manner indicative of anticipated depletion of consumable or expirable pest abatement devices.

Control mechanism 70 preferably includes a power source, such as a battery 72 or the like, and a wireless receiver, such as a RFID reader 74, configured for wireless interaction with and/or operation with key 60. As disclosed further below, whether provided with utility or consumable power, pest abatement system 40 can be configured to use the available power for pest abatement operations and/or powering of camouflage devices 42 associated therewith when such devices include power consuming features or elements, such as lights, backlighting, digital displays, device charging stations, televisions, or the like. Control mechanism 70 is preferably provided in a waterproof configuration thereby accommodating wet cleaning of drawer 48 and/or discrete pest abatement devices associated therewith when necessary or desired.

When oriented in the open orientation relative to housing 46, drawer 48 defines a bed 76 associated with supporting one or more pest abatement devices therein. Housing 46 defines an opening 78 that is shaped to be overlapped by a front face 80 of drawer 48 when drawer 48 is oriented in the closed configuration as shown in Fig. 1. When drawer 48 is opened and/or removed from housing 46, as shown in Figs. 4-6, bed 76 of drawer 48 is exposed thereby allowing user interaction with and/or placement, exchange, replenishment, removal, and/or service of pest abatement devices associated therewith. When provided in a removeable configuration, service personnel may move expeditiously and inconspicuously throughout a service environment and service one or more previously deployed pest abatement systems 40 via removal and replacement of discrete drawers 48 from previously deployed pest abatement systems 40. As disclosed further below, depending on the nature of the pest abatement being attempted, it is appreciated that the discrete replacement drawers 48 can be preconfigured for a desired target pest such that the interaction of the service personnel with the discrete pest abatement devices 40 can principally employ a "plug-and-play" methodology wherein configuration of the discrete drawers 48 can be completed outside of the presence of the personnel and patrons of the deployment environment.

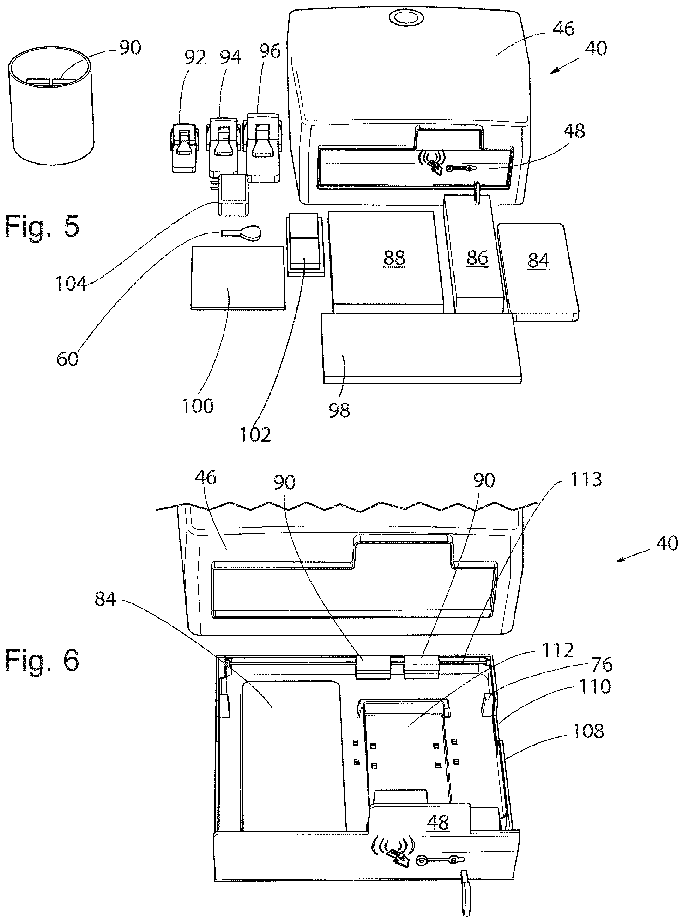

As shown in Fig. 5, pest abatement system 40 can be provided as a pest abatement device containment system as shown in Fig. 1 with limited discrete pest abatement devices for only targeted pests, such as rodents or insects, or can be provided as a kit that includes a plurality of discrete multi-pest pest abatement devices whether intended to be immediately employed or available for later usage. Whether provided as a device containment system or abatement system that includes a plurality of discrete pest abatement devices, pest abatement system 40 is constructed to cooperate with a plurality of discrete pest abatement devices to facilitate the intended use thereof. When provided as a kit, pest abatement system 40 can include one or more washable or disposable bait trays 84; one or more multiple rodent catch traps 86, 88; one or more rodent contraceptive or rodenticide baits, referred to collectively as rodenticide baits 90; one or more snap traps 92, 94, 96; one or more rodent or insect glue traps 98; dedicated insect glue traps 100; and/or one or more insect growth or reproductive limiting baits and/or insecticide traps 102; and/or rodent or insect electric trap elements. As disclosed further below, pest abatement system 40 can include a grid power cord 104 constructed to cooperate with the powered elements and/or rechargeable elements of pest abatement system 40 including control mechanisms 70, electrified pest abatement devices, and/or camouflage devices 42 associated with pest abatement system 40.

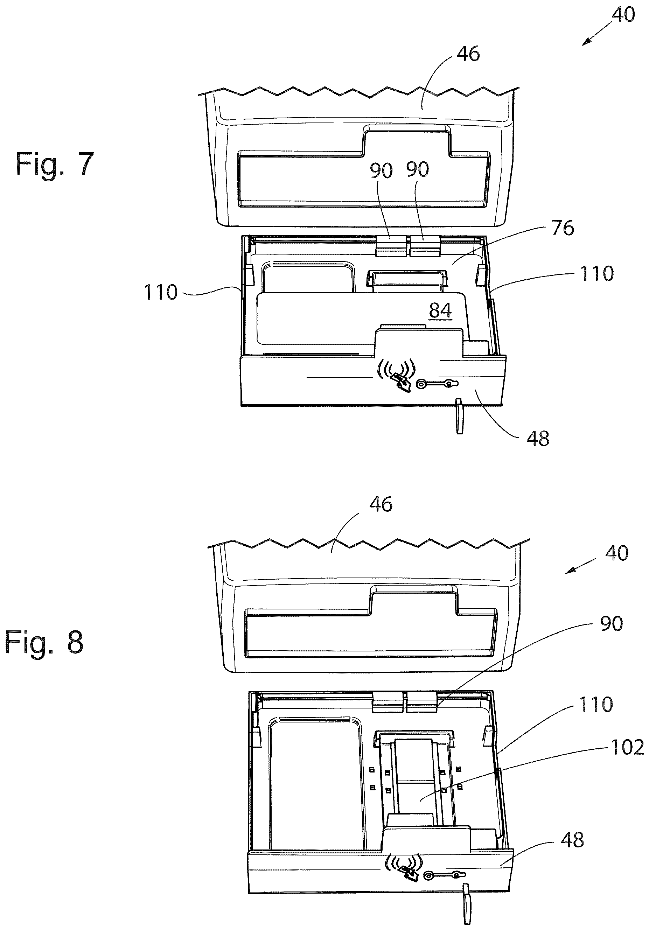

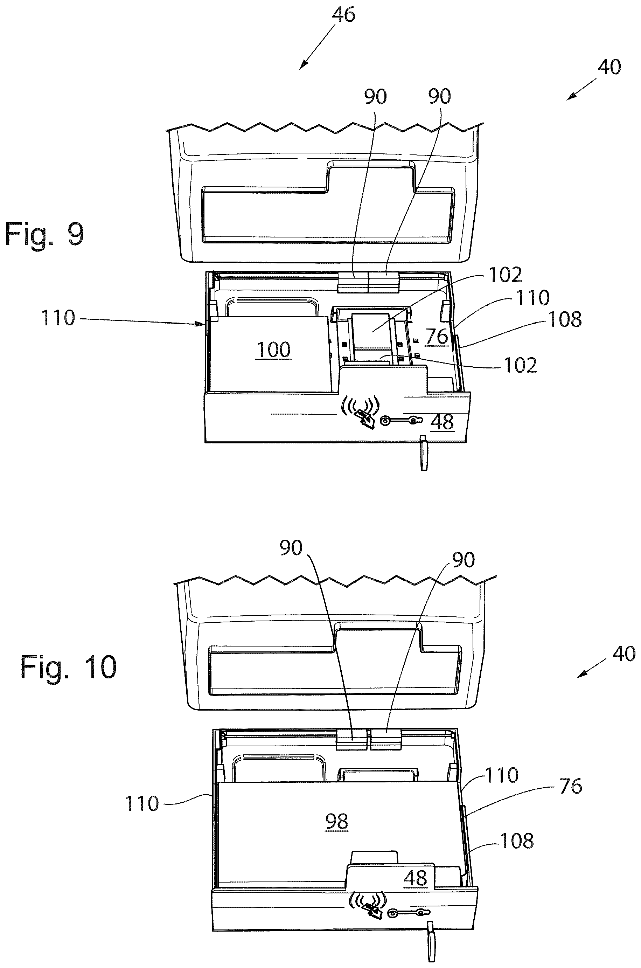

Referring to Fig. 6, bed 76 of drawer 48 is generally surrounded by a skirt 108 that includes one or more openings or cutouts 110 formed therein. Cutouts 110 are positioned to be generally aligned with openings 50, 52 (Fig. 1) defined by housing 46 when drawer 48 is closed relative thereto. Bed 76 includes one or more detents 112 associated with optionally securing respective discrete pest abatement devices relative thereto when the discrete pest abatement devices are positioned in drawer 48. In the configuration shown in Fig. 6, respective rodenticides 90 are secured to drawer 48 via a skewer or post 113 and a tray 84 is also associated therewith. When deployed in such a configuration, pest abatement system 40 allows the ingress and egress of pests and the transport of rodent reproductive inhibitors or rodenticides 90 to nesting environments that may exist at locations remote from the internal confines of pest abatement system 40. Referring to Figs. 7-10, pest abatement system 40 can be uniquely configured by the user or service personnel to address various discreet pest abatement efforts. For instance, as shown in Fig. 7, a bait tray 84 can be associated with bed 76 of drawer 48 at a position offset from rodenticide baits 90. Fig. 8 shows yet another alternate configuration of pest abatement system 40 wherein insect bait, growth or reproductive inhibitor and/or trap 102 may be disposed in and/or replace bait tray 84 without interfering with rodenticides 90. In yet another configuration, as shown in Fig. 9, insect glue trap 100, insect reproduction and/or growth limiting and/or insecticide traps 102, and rodenticide baits 90 may all be associated with drawer 48. In a further alternate configuration as shown in Figure 10, rodent glue trap 98 is associated with bed 76 of drawer 48 at a location offset from rodenticide baits 90.

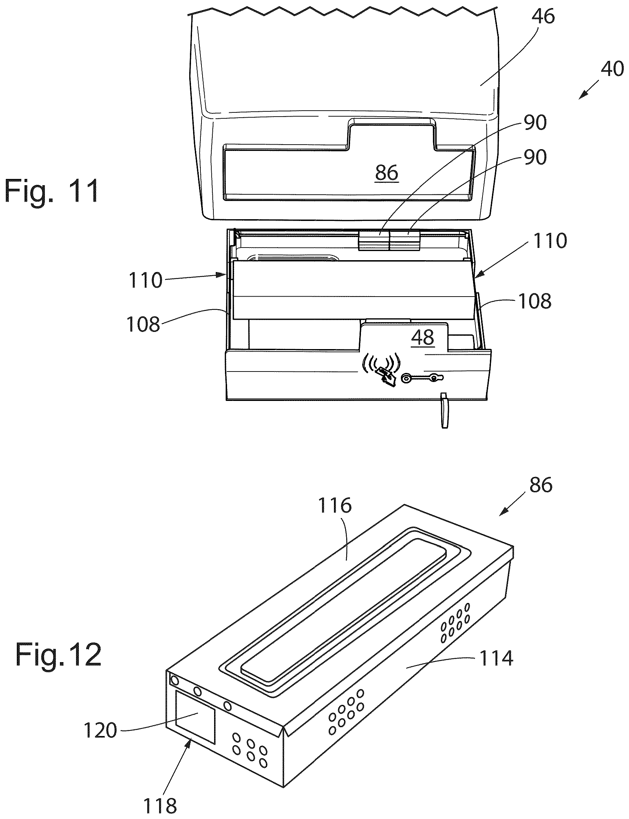

Referring to Figs. 11-13, respective multiple catch rodent traps 86, 88 can also be associated with bed 76 of drawer 48 and associated with the confines of housing 46 when drawer 48 is disposed therein and oriented in the closed orientation. Each of rodent multiple catch traps 86, 88 is generally defined by a housing 114 having a selectively operable cover 116 associated therewith. Cover 116 facilitates the selective removal of rodents captured by respective catch traps 86, 88 therefrom. Housing 114 defines at least one opening 118 having a trap door 120 associated therewith such that, upon entering the respective multiple catch trap 86, 88, rodents are incapable of escaping therefrom.

Opening 118 of respective multiple catch trap 86, 88 is oriented to generally overlie a respective opening 110 formed in drawer 48 and a respective one of openings 50, 52 formed in housing 46 to allow the ingress of rodents into base assembly 44 and directly into respective multiple catch trap 86, 88 disposed therein. It is appreciated that respective multiple catch traps 86, 88 can be constructed to include two discrete openings 118 and corresponding trap doors 120 and oriented to generally overlie openings 110 formed in drawer 48 and openings 50, 52 formed in housing 46. When employed in such a manner, it is appreciated that, although rodents can detect the presence of and are attracted to rodent reproduction inhibitors or rodenticides 90 associated with drawer 48, multiple catch traps 86, 88 inhibit rodent access to rodenticides 90 and thereby mitigate the depletion of rodenticides 90 and/or any other rodent baits that may be disposed in drawer 48 but external to multiple catch traps 86, 88.

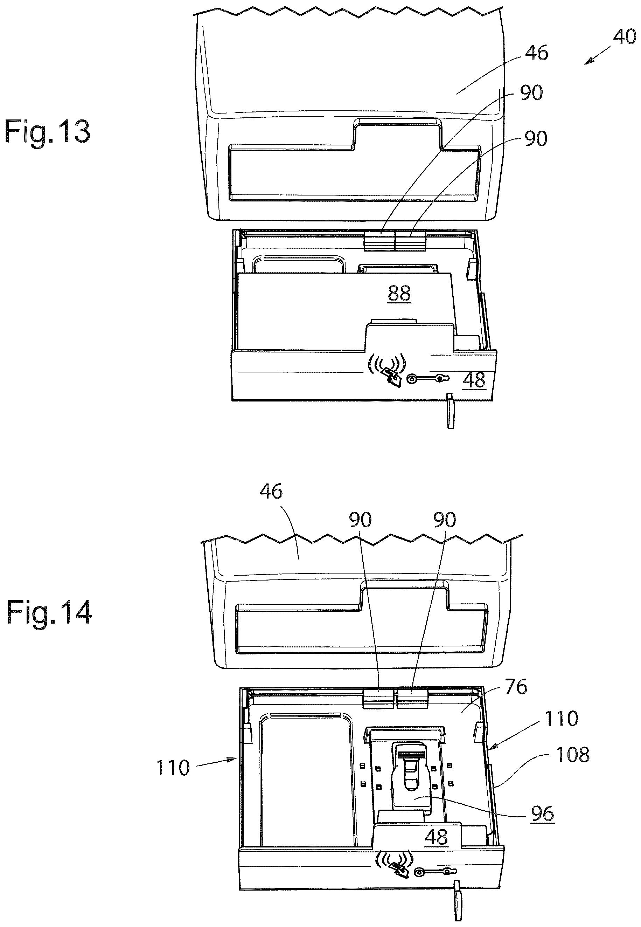

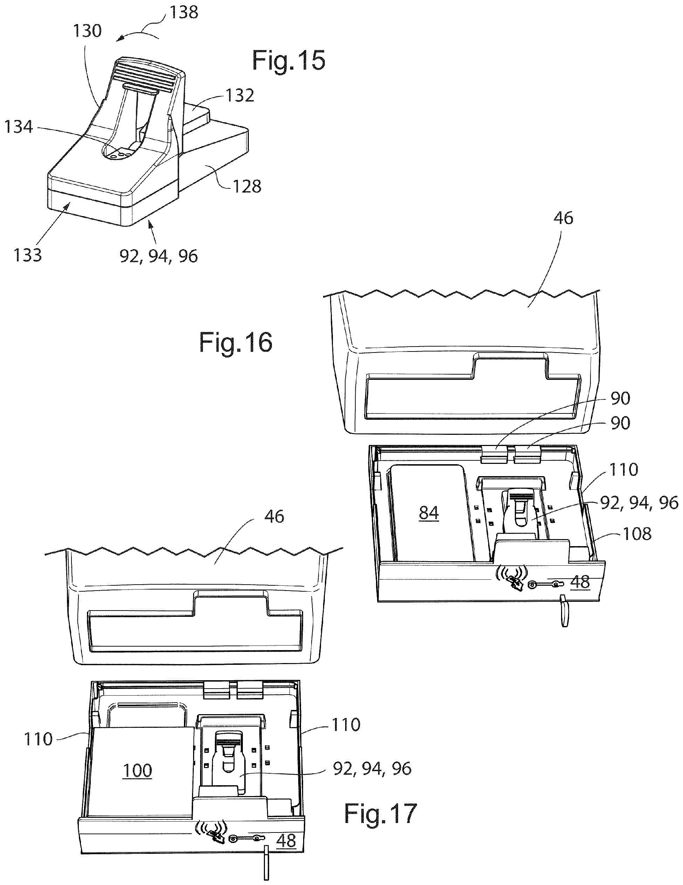

Figs. 14-17 show further alternate configurations associated with deployment of pest abatement system 40. Referring to Figs. 14 and 15, one or more of snap traps 92, 94, 96 can be associated with bed 76 of drawer 48. Referring to Fig. 15, each snap trap 92, 94, 96 includes a base 128, a trap arm 130, a catch 132, and a trigger 134. Trap arm 130 is pivotally connected to base 128 to be movable between a set position, wherein trigger 134 is fully exposed, and a tripped position, as shown in Fig. 15, wherein trap arm 130 generally overlies trigger 134 thereby trapping rodents at a location 133 between trap arm 130 and base 128. When set for trapping operations, trap arm 130 substantially overlies catch 132 such that trigger 134 is fully exposed and accessible to rodents passing into location 133. Rodent interaction with trigger 134 effectuates rotation, indicated by arrow 138, of trap arm 130 toward base 128 thereby effectuating the trapping operation. As shown in Fig. 14, bed 76 of drawer 48 is sized to accommodate one or more of spring traps 92, 94, 96 and; as shown in Figs. 16 and 17, one or more respective spring traps 92, 94, 96 and alternate abatement devices such as a bait, rodent reproduction inhibitor, insect reproduction or growth inhibitors, or insecticide or rodenticide tray 84; and/or a glue trap or inset growth inhibitor, insect reproduction inhibitor, or insecticide trap 100, respectively.

With respect to the configuration of pest abatement system 40 shown in Figs. 10-13 wherein multiple capture traps 86, 98 are employed and thereby limit access to rodenticides 90 supported in drawer 48, it is appreciated that the configuration of pest abatement system 40 shown in Figs. 14-17 exposes insects and/or rodents to both rodenticides 90 and exposure to interaction with snap traps 92, 94, 96. That is, pest abatement system 40 can be configured to provide onboard storage but non-usage or non-consumption of one or more of pest abatement devices 86, 88, 90, 92, 94, 96, 98, 100, 102 during deployment of pest abatement system 40 thereby mitigating loss and/or separation and/or usage of one or more of the discrete pest abatement devices. That is, pest abatement devices not germane to a given episode of pest abatement can be stored within base assembly 44 via drawer 48 such that the same remain available for subsequent use should the need arise.

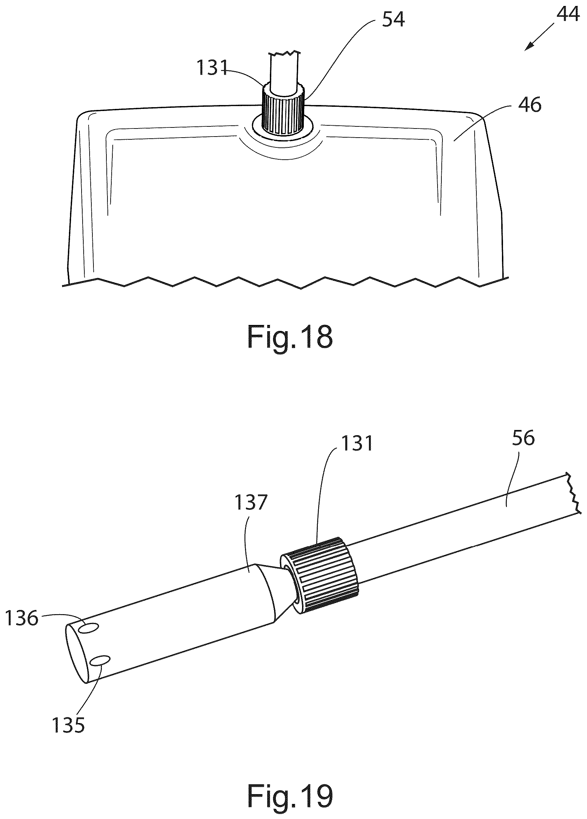

It is appreciated that pest abatement system 40 may be deployed in locations wherein camouflaging the pest abatement system 40 as a non-pest abatement device may not be necessary or desired. For instance, when deployed in locations not commonly accessible to consumers or persons otherwise unaware of or responsible for the abatement efforts, pest abatement system 40 may be deployed in manner wherein the camouflage devices 42 may be selectively dissociated from base assembly 44. Such uses of pest abatement system 40 maintain the benefits of the selectively securable and movable operation of drawer 48 relative to housing 48 and the ability to individualize the contents of drawer 48 that are accessible to pests to effectuate a desired abatement. Referring to Figs. 18-22, when pest abatement system 40 is deployed in areas or locations where the pest abatement system 40 may be visible to third parties - whether staff, consumers, customers, patrons, or other non-pest abatement responsible personnel; camouflage devices 42 may be engaged with stem 54 of base assembly 44.

Referring to Figs. 18 and 19, a collet 131 and stem 133 cooperate with stem 54 of base assembly 44 and slideably cooperate with post 56. In alternate embodiments, one or more conductors 135, 136 are associated with stem 133 and communicate operational power communicated through base assembly 44 toward the camouflage device 42 associated with an upwardly extending end of post 56. Referring to Fig. 20, camouflage device 42 may take that form of signage 58 advertise environment specific indicia such as menu items 140, sales promotions 142, greetings and/or hours of operation 144, or other deployment environment specific information. As alluded to above, base assembly 44 includes a power input 150 associated with at least one of housing 46 and drawer 48 and that is constructed to communicate grid power, indicated by power cord 104 to an onboard power source of pest abatement system 40, such as any batteries associated with control mechanism 70.

When camouflage device 42 is constructed to include power consuming elements, such as lights, backlighting, digital displays, or the like, conductors 135, 136 cooperate with base assembly 44 and communicate operational power to camouflage devices 42 equipped with such power consuming elements. Such considerations enhance the perception of pest abatement system 40 as a non-pest abatement related device. It is further appreciated that the users of pest abatement system 40 may prefer use of camouflage elements or devices that are individualized to a specific environment, establishment, or location specific to the intended deployment of pest abatement system 40. Referring to Fig. 22, user's preferring individualized camouflage elements 42 or more specific signage 58 can interact with an internet portal or webpage interface to select from stock signage 160, semi-customizable signage 162, and/or custom uploadable art and/or signage 164 suitable for interaction with discrete camouflage devices 42. Ready access to stock and individualized camouflage signage elements allows users to maintain fresh and timely appearance of various camouflage elements and accommodate changes in stock, hours or operations, specials, and the like in a manner that further supports the non-pest abatement related appearance of pest abatement system 40. Such a consideration also facilitates the usage of pest abatement system 40 for signage efforts even when no abatement efforts are being undertaken.

Although a specific embodiment is illustrated and discussed above, it is understood that the size and shape of the pest abatement system 40 may vary greatly to accommodate space requirements and the size and shape of the rodents targeted with the respective pest abatement system 40, the discrete pest abatement devices employed therewith, as well as the intended camouflage devises 42 associated therewith. While the figures have illustrated pest abatement system 40 as having a height of approximately 48-64 inches, a width of approximately 12-15 inches, and a depth of approximately 12-15 inches, larger or smaller pest abatement systems 40 are considered well within the scope of the present invention. Additionally, while the illustrated pest abatement system 40 has a weight of approximately 8-15 pounds, including any ballast associated with base assembly 44, heavier or lighter pest abatement systems are considered well within the scope of the present invention.

A pest abatement system constructed to abate pests such as insects and/or rodents and that is constructed to appear as a non-abatement device customary to a deployment environment. The abatement system is defined by an enclosure and a selectively movable drawer that slideably cooperates with the enclosure. A lock arrangement includes a key that operates in multiple modalities restricts access to the contents of the drawer to authorized personnel. The enclosure is constructed to accommodate connection of camouflage structures to the abatement system and which are operable to camouflage the nature of the pest abatement system as a non-abatement device. The drawer is further constructed to accommodate onboard storage of multiple pest abatement devices and/or consumables that are inaccessible to pests that have entered a containment or trap area of the abatement system.

Therefore, one embodiment of the present invention includes a pest abatement system that has an enclosure with at least one pest entry opening and a drawer that slideably cooperates with the enclosure. The drawer is selectively operable to extend beyond the enclosure when open. A lock system selectively restrains the drawer in a closed position relative to the enclosure when the drawer is closed and is configured to limit unauthorized access to the contents of the pest abatement system when deployed.

Another embodiment of the invention that is usable or combinable with one or more of the features, aspects, or objects of the above embodiments discloses pest abatement system having an enclosure and a drawer that slideably cooperates with the enclosure. At least one pest entry opening is formed in at least one of the enclosure and the drawer and configured to allow access of pests into the pest abatement system and at least two pest abatement devices that are supported by the drawer. The pest abatement system includes a key that is constructed to cooperate with at least one of the enclosure and the drawer and configured to allow unlocking of the drawer relative to the enclosure to allow access to each of the at least two pest abatement devices. A camouflage structure is selectively attachable to the enclosure and is configured to provide a non-abatement indication such that identification of the pest abatement system as a pest abatement system is not readily discernable.

A further embodiment of the present invention that is usable or combinable with one or more of the features, aspects, or objects of the above embodiments discloses a method of forming a pest abatement system and that includes providing an enclosure and a drawer that slideably cooperates with the enclosure such that the drawer is movable between an open position and a closed position relative to the enclosure. A pest entry opening is formed in at least one of the enclosure and the drawer and a lock is provided that selectively secures the drawer in the closed position relative to the enclosure. A key that cooperates with the lock is provided and operable in each of an electronic modality and a physical modality to unlock the lock to allow access to the contents of the drawer.

It is appreciated that the invention is not limited in its application to the details of construction and arrangements of the components set forth herein. The invention is capable of other embodiments and of being practiced or carried out in various ways.

Variations and modifications of the foregoing are within the scope of the present invention. It is also understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

## Claims

1. A pest abatement system comprising:
an enclosure having at least one pest entry opening;
a drawer that slideably cooperates with the enclosure and is selectively operable to extend beyond the enclosure when open; and
a lock system that selectively restrains the drawer in a closed position relative to the enclosure when the drawer is closed.

2. The pest abatement system of claim 1 wherein the lock system further comprises a key that at least one of touchlessly operates the lock system and physically cooperates with the lock system to facilitate unlocking of the lock system, optionally wherein the key is constructed to allow Radio-Frequency Identification (RFID) operation of the lock and constructed to allow physical operation of the lock system.

3. The pest abatement system of claim 1 further comprising a power source supported by the drawer.

4. The pest abatement system of claim 1 further comprising a rodent abatement device and an insect abatement device constructed to be concurrently supported by the drawer, optionally wherein the rodent abatement device is further defined as at least one of a glue trap, a rodenticide bait, a rodent contraceptive, a capture trap, and a snap trap; and the insect abatement device is further defined as at least one of an insecticide bait, an insect growth inhibitor, an insect reproduction inhibitor, and an insect glue trap.

5. The pest abatement system of claim 1 further comprising a camouflage structure constructed to engage the enclosure and provide a non-abatement indication, optionally wherein the non-abatement indication is further defined as least one of signage that is indicative of a deployment environment, a trashcan, a digital display, a hand sanitizer station, and a planter.

6. A pest abatement system comprising:
an enclosure;
a drawer that slideably cooperates with the enclosure;
at least one pest entry opening formed in at least of the enclosure and the drawer;
at least two pest abatement devices supported by the drawer;
a key constructed to cooperate with at least one of the enclosure and the drawer and configured to allow unlocking of the drawer relative to the enclosure to allow access to each of the at least two pest abatement devices; and
a camouflage structure selectively attachable to the enclosure and that is configured to provide a non-abatement indication.

7. The pest abatement system of claim 6 wherein the camouflage structure is further defined as signage that is indicative of a deployment environment, a trashcan, a digital display; a hand sanitizer station, and a planter.

8. The pest abatement system of claim 7 wherein each camouflage structure is interchangeable with the enclosure.

9. The pest abatement system of claim 7 wherein the key is at least one of Radio-Frequency Identification (RFID) operable and physically operable to cooperate with a keyhole defined by the at least one of the enclosure and the drawer, optionally wherein the key is both of RFID operable and physically operable.

10. The pest abatement system of claim 6 further comprising a power source supported by the drawer.

11. The pest abatement system of claim 6 wherein the at least two pest abatement devices are further defined as a first of a rodent abatement device that is further defined as at least one of a glue trap, a rodenticide bait, a rodent contraceptive, a capture trap, and a snap trap; and an insect abatement device that is further defined as at least one of an insecticide bait, an insecticide, an insect reproduction inhibitor, an insect growth inhibitor, and an insect glue trap and a second of a rodent abatement device that is further defined as at least one of a glue trap, a rodenticide bait, a rodent contraceptive, a capture trap, and a snap trap; and an insecticide abatement device that is further defined as at least one of an insecticide bait, an insect reproduction inhibitor, an insect growth inhibitor, and an insect glue trap.

12. A method of forming a pest abatement system, the method comprising:
providing an enclosure and a drawer that slideably cooperates with the enclosure such that the drawer is movable between an open position and a closed position relative to the enclosure;
forming a pest entry opening in at least one of the enclosure and the drawer;
providing a lock that selectively secures the drawer in the closed position relative to the enclosure;
providing a key that cooperates with the lock and is operable in an electronic modality and a physical modality to unlock the lock.

13. The method of claim 12 further comprising providing a first pest abatement device and a second pest abatement that concurrently cooperate with the drawer and are selectively accessible when the drawer is in the open position, optionally wherein the first pest abatement device is further defined as one of a rodent glue trap, a rodenticide bait, a rodent contraceptive, a capture trap, a snap trap, an insecticide bait, an insect reproduction inhibitor, an insect growth inhibitor, and an insect glue trap and the second pest abatement device is further defined as one of a rodent glue trap, a rodenticide bait, a rodent contraceptive, a capture trap, a snap trap, an insecticide bait, an insect reproduction inhibitor, an insect growth inhibitor, and an insect glue trap.

14. The method of claim 12 further comprising providing a radio frequency communication between the key and the lock.

15. The method of claim 12 further comprising providing a camouflage structure that is constructed to cooperated with the enclosure and which at least one of defined as signage indicative of a deployment environment, a trashcan, a digital display; a hand sanitizer station, and a planter, optionally further comprising at least one of allowing a user to select the camouflage structure and design camouflage structure unique to a deployment environment.
